# EUROPÄISCHE PATENTSCHRIFT

(11) **EP 3 070 564 B1**
(45) Veröffentlichungstag und Bekanntmachung des Hinweises auf die Patenterteilung: **26.12.2018**
(21) Anmeldenummer: 16159680.4
(22) Anmeldetag: 10.03.2016
(51) Int. Cl.: G05D 1/02, B62D 47/00, B62D 59/04

(54) **FAHRZEUGVERBUND UND VERFAHREN ZUM BILDEN UND BETREIBEN EINES FAHRZEUGVERBUNDES**
VEHICLE COMBINATION AND A METHOD FOR FORMING AND OPERATING A VEHICLE COMBINATION
VEHICULE COMPOSITE ET PROCEDE DE FORMATION ET DE FONCTIONNEMENT D'UN VEHICULE COMPOSITE

(30) Priorität: 19.03.2015 DE 102015205032
(43) Veröffentlichungstag der Anmeldung: 21.09.2016
(73) Patentinhaber: KUKA Deutschland GmbH, 86165 Augsburg (DE)
(72) Erfinder: BICK, Christoph, 86199 Augsburg (DE); MEYER-DELIUS, Daniel, 81541 München (DE); TARDIVON, Jeremie, 86165 Augsburg (DE)
(74) Vertreter: Ege Lee & Partner Patentanwälte PartGmbB

(56) Entgegenhaltungen:
- EP-A1- 2 402 924
- DE-U1-202012 002 846
- JP-A- 2014 182 536

## Beschreibung

Die Erfindung betrifft ein Verfahren zum Bilden und Betreiben eines Fahrzeugverbundes, der mehrere autonome Fahrzeuge aufweist. Die Erfindung betrifft außerdem einen entsprechenden Fahrzeugverbund.

Ein autonomes Fahrzeug ist beispielsweise ein fahrerloses Transportfahrzeug (Englisch: Automated Guided Vehicle (AGV)). Ein fahrerloses Transportfahrzeug ist ein flurgebundenes Fördermittel mit einem eigenen Antrieb, das automatisch gesteuert und berührungslos geführt wird.

Die EP 1 957 348 B1 offenbart einen Fahrzeugverbund aus mehreren Einzelfahrzeugen. Die Einzelfahrzeuge umfassen jeweils ein Chassis, an denen Kopplungsvorrichtungen ausgebildet sind, die eine formschlüssige Kopplung zweier Einzelfahrzeuge miteinander ermöglichen, und eine Einzelsteuerung. Die mechanische Kopplung lässt eine Relativbewegung der Einzelfahrzeuge zueinander innerhalb der Fahrebene nicht zu. Im Fahrzeugverbund sind die Einzelsteuerungen inaktiv und die Radantriebe der Einzelfahrzeuge werden über eine übergeordnete Verbundsteuerung selektiv angesteuert.

Die DE 20 2012 002 846 U1 beschreibt ein Elektrokraftfahrzeug, insbesondere Elektro-Personen-Kraftfahrzeug, oder Hybridelektrokraftfahrzeug, insbesondere Hybridelektro-Personen-Kraftfahrzeug, mit mindestens drei Rädern, das sowohl einzeln fahren und betrieben werden kann, als auch mit mindestens einem Erweiterungsmodul und/oder mindestens einem identischen Kraftfahrzeug oder einem Kraftfahrzeug vom selben Typ im Stand und während der Fahrt elektromechanisch koppelbar und auch wieder entkoppelbar ist.

Aufgabe der Erfindung ist es, ein verbessertes Verfahren zum Bilden und Betreiben eines Fahrzeugverbundes aus autonomen Fahrzeugen, insbesondere aus fahrerlosen Transportfahrzeugen anzugeben.
Die Aufgabe der Erfindung wird gelöst durch ein Verfahren zum Bilden und Betreiben eines Fahrzeugverbundes, welcher zumindest ein erstes autonomes Fahrzeug und ein zweites autonomes Fahrzeugaufweist, wobei jedes der autonomen Fahrzeugs eingerichtet ist, in dem Zustand, in dem die autonomen Fahrzeuge keinen Fahrzeugverbund bilden, seine Bewegung automatisch zu steuern, aufweisend folgende Verfahrensschritte:
a) automatisches Aufbauen einer Kommunikationsverbindung zwischen dem ersten autonomen Fahrzeug und dem zweiten autonomen Fahrzeug, und
b) automatisches Steuern der Bewegung des zweiten autonomen Fahrzeugs durch das erste autonome Fahrzeug über die Kommunikationsverbindung, um einen Fahrzeugverbund aus dem ersten autonomen Fahrzeug und dem zweiten autonomen Fahrzeugs zu bilden, wobei
   jedes der autonomen Fahrzeuge ein eigenes Bus-System, Räder zum Bewegen des entsprechenden autonomen Fahrzeugs, Antriebsvorrichtungen zum Antreiben der Räder, Sensoren und eine elektronische Steuervorrichtung aufweist, wobei die Steuervorrichtung eingerichtet ist, über das Bus-System des entsprechenden autonomen Fahrzeugs mit den Sensoren und den Antriebsvorrichtungen des entsprechenden autonomen Fahrzeugs zu kommunizieren, um in dem Zustand, in dem die autonomen Fahrzeuge keinen Fahrzeugverbund bilden, ihr autonomes Fahrzeug durch automatisches Ansteuern der Antriebsvorrichtungen des entsprechenden autonomen Fahrzeugs automatisch zu bewegen, aufweisend die folgenden weiteren Verfahrensschritte:
   - automatisches Aufbauen der Kommunikationsverbindung zwischen dem Bus-System des ersten autonomen Fahrzeugs und dem Bus-System des zweiten autonomen Fahrzeugs, um ein Gesamtbus-System zu bilden, und
   - direktes Ansteuern der Antriebsvorrichtungen des zweiten Transportfahrzeugs durch die elektronische Steuervorrichtung des ersten autonomen Fahrzeugs über das Gesamtbus-System, um den Fahrzeugverbund aus dem ersten autonomen Fahrzeug und dem zweiten autonomen Fahrzeug zu bilden.

Ein weiterer Aspekt der Erfindung betrifft einen Fahrzeugverbund, aufweisend wenigstens ein erstes autonomes Fahrzeug und ein zweites autonomes Fahrzeug, die jeweils eingerichtet sind, in dem Zustand, in dem die autonomen Fahrzeuge keinen Fahrzeugverbund bilden, ihre Bewegungen automatisch selber zu steuern, und während des Fahrzeugverbundes die beiden autonomen Fahrzeuge über eine Kommunikationsverbindung verbunden sind und das erste autonomen Fahrzeug über die Kommunikationsverbindung die Bewegung des zweiten autonomen Fahrzeugs automatisch steuert.

Mit dem erfindungsgemäßen Verfahren kann der erfindungsgemäße Fahrzeugverbund gebildet werden.

Das erste autonome Fahrzeug ist vorzugsweise ein erstes fahrerloses Transportfahrzeug und das zweite autonome Fahrzeug ist vorzugsweise ein zweites fahrerloses Transportfahrzeug.

Der Fahrzeugverbund umfasst die wenigstens zwei autonomen Fahrzeuge. Wenn die autonomen Fahrzeuge nicht zum Fahrverbund zusammengeschlossen sind, dann ist jedes der autonomen Fahrzeuge eingerichtet, seine eigene Bewegung automatisch zu steuern. Im Fahrzeugverbund dagegen sind die autonomen Fahrzeuge mittels der Kommunikationsverbindung verbunden. Diese ist insbesondere eine drahtlose Kommunikationsverbindung. Dazu umfassen beispielsweise die autonomen Fahrzeuge geeignete Sende-/ Empfangsvorrichtungen. Vorzugsweise umfasst jedes der autonomen Fahrzeuge eine Datenlichtschranke, über die die Kommunikationsverbindung insbesondere drahtlos eingerichtet ist bzw. wird. Die Kommunikationsverbindung ist insbesondere eine bidirektionale Kommunikationsverbindung.

Über die Kommunikationsverbindung können die autonomen Fahrzeuge kommunizieren und somit den erfindungsgemäßen Fahrzeugverbund bilden, bei dem das erste autonome Fahrzeug das zweite autonome Fahrzeug bzw. dessen Bewegung automatisch steuert. Dadurch erscheint der Fahrzeugverbund wie ein einzelnes Fahrzeug.

Erfindungsgemäß umfasst jedes der autonomen Fahrzeuge ein eigenes Bus-System, Räder zum Bewegen des entsprechenden autonomen Fahrzeugs, Antriebsvorrichtungen zum Antreiben der Räder, Sensoren und eine elektronische Steuervorrichtung, welche über das Bus-System des entsprechenden autonomen Fahrzeugs mit den Sensoren und den Antriebsvorrichtungen des entsprechenden autonomen Fahrzeugs zu kommunizieren vermag, um in dem Zustand, in dem die autonomen Fahrzeuge keinen Fahrzeugverbund bilden, ihr autonomes Fahrzeugdurch automatisches Ansteuern der Antriebsvorrichtungen des entsprechenden autonomen Fahrzeugs automatisch zu bewegen. Jedes der autonomen Fahrzeuge umfasst demnach seine eigene elektronische Steuervorrichtung und sein eigenes Bus-System, über das die elektronische Steuervorrichtung die Antriebsvorrichtungen des entsprechenden autonomen Fahrzeugs anzusteuern vermag. Somit kann sich jedes der autonomen Fahrzeuge automatisch gesteuert durch seine eigene elektronische Steuervorrichtung bewegen, wenn die autonomen Fahrzeuge nicht zum Fahrzeugverbund zusammengeschlossen sind. Die Antriebsvorrichtungen umfassen z.B. jeweils einen Antrieb, vorzugsweise einen elektrischen Antrieb, der zum Antreiben eines Rades vorgesehen ist, und eine Antriebsregelvorrichtung zum Regeln des Antriebs. Die Antriebsregelvorrichtung ist über das Bus-System mit der entsprechenden elektronischen Steuervorrichtung verbunden.

Die Sensoren sind insbesondere Laserscanner, welche zum Abtasten der Umgebung des autonomen Fahrzeugs vorgesehen sind. Die Daten der Sensoren bzw. Laserscanner können an die entsprechende elektronische Steuervorrichtung gesendet werden, damit diese die Daten auszuwerten vermag.

Die autonomen Fahrzeuge sind vorzugsweise holonome bzw. omnidirektionale autonome Fahrzeuge, vorzugsweise holonome bzw. omnidirektionale fahrerlose Transportfahrzeuge. In diesem Fall umfasst jedes der autonomen Fahrzeuge omnidirektionale Räder, vorzugsweise sogenannte Mecanum-Räder, deren Antriebe von den elektronischen Steuervorrichtungen angesteuert werden.

Gemäß des erfindungsgemäßen Verfahrens kann dieses ein automatisches Aufbauen der Kommunikationsverbindung zwischen dem Bus-System des ersten autonomen Fahrzeugs und dem Bus-System des zweiten autonomen Fahrzeugs aufweisen, um ein Gesamtbus-System zu bilden. Somit können während des Fahrzeugverbundes die beiden Bus-Systeme über die Kommunikationsverbindung ein Gesamtbus-System bilden.

Das erfindungsgemäße Verfahren weist ein automatisches Ansteuern der Antriebsvorrichtungen des zweiten autonomen Fahrzeugs durch die elektronische Steuervorrichtung des ersten autonomen Fahrzeugs über das Gesamtbus-System auf, um den Fahrzeugverbund aus dem ersten autonomen Fahrzeug und dem zweiten autonomen Fahrzeuge zu bilden.

Demgemäß ergibt sich ein Verfahren zum Bilden und Betreiben eines Fahrzeugverbundes, welcher zumindest ein erstes autonomes Fahrzeug und ein zweites autonomes Fahrzeug aufweist, wobei jedes der autonomen Fahrzeuge eingerichtet ist, in dem Zustand, in dem die autonomen Fahrzeuge keinen Fahrzeugverbund bilden, seine Bewegung automatisch zu steuern, und jedes der autonomen Fahrzeuge ein eigenes Bus-System, Räder zum Bewegen des entsprechenden autonomen Fahrzeugs, Antriebsvorrichtungen zum Antreiben der Räder, Sensoren und eine elektronische Steuervorrichtung aufweist, wobei die Steuervorrichtung eingerichtet ist über das Bus-System des entsprechenden autonomen Fahrzeugs mit den Sensoren und den Antriebsvorrichtungen des entsprechenden autonomen Fahrzeugs zu kommunizieren, um in dem Zustand, in dem die autonomen Fahrzeuge keinen Fahrzeugverbund bilden, ihr autonomes Fahrzeug durch automatisches Ansteuern der Antriebsvorrichtungen des entsprechenden autonomen Fahrzeugs automatisch zu bewegen, aufweisend folgende Verfahrensschritte:
a) automatisches Aufbauen einer Kommunikationsverbindung zwischen dem Bus-System des ersten autonomen Fahrzeugs und dem Bus-System des zweiten autonomen Fahrzeugs, um ein Gesamtbus-System zu bilden, und
b) automatisches Ansteuern der Antriebsvorrichtungen des zweiten Transportfahrzeugs durch die elektronische Steuervorrichtung des ersten autonomen Fahrzeugs über das Gesamtbus-System, um den Fahrzeugverbund aus dem ersten autonomen Fahrzeug und dem zweiten autonomen Fahrzeug zu bilden.

Es steuert somit bei dem erfindungsgemäßen Fahrzeugverbund die elektronische Steuervorrichtung des ersten autonomen Fahrzeugs über das Gesamtbus-System die Antriebsvorrichtungen des zweiten autonomen Fahrzeugs direkt an, um den Fahrzeugverbund aus dem ersten autonomen Fahrzeug und dem zweiten autonomen Fahrzeug zu bilden.

Aufgrund des Gesamtbus-Systems kann somit die elektronische Steuervorrichtung des ersten autonomen Fahrzeugs direkt mit den Sensoren und den Antriebsvorrichtungen des zweiten autonomen Fahrzeugs kommunizieren, also unter Umgehen der elektronischen Steuervorrichtung des zweiten autonomen Fahrzeugs, um dieses automatisch zu bewegen.

Vor dem Schritt a) kann z.B. Folgendes durchgeführt werden:
Detektieren von charakteristischen Merkmalen des zweiten autonomen Fahrzeugs mittels des ersten autonomen Fahrzeugs und Ermitteln der relativen Lage (d.h. Position und Orientierung) zwischen den beiden autonomen Fahrzeugen durch das erste autonome Fahrzeug und automatisches Bewegen des ersten autonomen Fahrzeugs insbesondere gesteuert durch seine elektronische Steuervorrichtung, sodass die beiden autonomen Fahrzeuge eine vorbestimmte Lage relativ zueinander aufweisen, oder

Detektieren von charakteristischen Merkmalen des ersten autonomen Fahrzeugs mittels des zweiten autonomen Fahrzeugs und Ermitteln der relativen Lage zwischen den beiden autonomen Fahrzeugen durch das zweite autonomen Fahrzeug und automatisches Bewegen des zweiten autonomen Fahrzeugs insbesondere gesteuert durch seine elektronische Steuervorrichtung, sodass die beiden autonomen Fahrzeuge eine vorbestimmte Lage relativ zueinander aufweisen.

So kann es vorgesehen sein, dass z.B. ausgehend von einer beliebigen Pose bzw. Lage, d.h. Position und Orientierung, eines der beiden autonomen Fahrzeuge mittels seiner Sensoren charakteristische Merkmale des anderen autonomen Fahrzeugs detektiert. Anhand von diesen Merkmalen ist es diesem autonomen Fahrzeug mit seiner elektronischen Steuervorrichtung möglich, die relative Pose bzw. Lage der beiden autonomen Fahrzeuge zu berechnen. Die charakteristischen Merkmale werden beispielsweise aus einem geometrischen Modell des anderen autonomen Fahrzeugs berechnet. Das Modell ist z.B. in der elektronischen Steuervorrichtung des entsprechenden autonomen Fahrzeugs gespeichert.

Anschließend kann eines der beiden autonomen Fahrzeuge automatisch gesteuert durch seine elektronische Steuervorrichtung und vorzugsweise geregelt zu einer vordefinierten Andockpose bzw. Andocklage relativ zum anderen autonomen Fahrzeug fahren. Beispielsweise anhand von Daten der Sensoren des sich automatisch bewegenden autonomen Fahrzeugs und Odometrie-Daten kann dieses autonome Fahrzeug automatisch die relative Pose bzw. Lage zum anderen autonomen Fahrzeug während seiner automatischen Bewegung verfolgen. Die automatische Verfolgung der relativen Lage erfolgt beispielsweise anhand eines dem Fachmann im Prinzip bekannten Partikelfilter-basierten-Verfahrens.

Sind die beiden autonomen Fahrzeuge ausreichend angenähert, kann die Kommunikationsverbindung automatisch hergestellt werden.

Die beiden autonomen Fahrzeuge können jeweils eine mechanische Kopplungsvorrichtung aufweisen. Dann kann es vorgesehen sein, dass die beiden autonomen Fahrzeuge automatisch mittels der mechanischen Kopplungsvorrichtungen insbesondere gesteuert durch die elektronische Steuervorrichtung des ersten autonomen Fahrzeugs über das Gesamtbus-System gekoppelt werden.

Vorzugsweise umfassen die beiden autonomen Fahrzeuge jeweils eine Navigationsfunktionalität. Diese umfasst insbesondere eine Information über die Konfiguration des entsprechenden autonomen Fahrzeugs. Basierend auf dieser Navigationsfunktionalität kann in dem Zustand, in dem die autonomen Fahrzeuge keinen Fahrzeugverbund bilden, die elektrische Steuervorrichtung ihr autonomes Fahrzeug automatisch bewegen. Die Information über die Konfiguration des entsprechenden autonomen Fahrzeugs umfasst z.B. ein Modell des entsprechenden autonomen Fahrzeugs. Dieses Modell ist z.B. in der entsprechenden elektronischen Steuervorrichtung gespeichert. Das Modell umfasst z.B. eine Angabe über die Kontur, über den Drehmittelpunkt, über kino-dynamische Parameter (maximale Geschwindigkeit, Beschleunigung, etc.), über die Anzahl, die Position und Verbindungsdaten der Sensoren des entsprechenden autonomen Fahrzeugs.

Gemäß einer Variante des erfindungsgemäßen Verfahrens ist ein automatisches Umkonfigurieren der Navigationsfunktionalität des ersten autonomen Fahrzeugs vorgesehen, sodass diese eine Information über die Konfiguration des Fahrzeugverbundes umfasst. Die Information über die Konfiguration des Fahrzeugverbundes kann z.B. ein Modell des Fahrzeugverbundes umfassen. Dieses Modell umfasst z.B. eine Angabe über die Kontur, über den Drehmittelpunkt, über kino-dynamische Parameter (maximale Geschwindigkeit, Beschleunigung, etc.), über die Anzahl, die Position und Verbindungsdaten der Sensoren des Fahrzeugverbundes.

Es kann auch eine automatische Auflösung des Fahrzeugverbundes vorgesehen sein. Dafür können folgende Schritte durchgeführt werden:
Sind die autonomen Fahrzeuge mechanisch gekoppelt, erfolgt eine mechanische Entkopplung. Diese wird vorzugsweise durch das erste autonome Fahrzeug automatisch gesteuert. Die Kopplungsvorrichtungen beider autonomen Fahrzeuge werden vorzugsweise gemeinsam geöffnet.

Anschließend erfolgt ein Wechsel der Fahrzeug-Rolle: Die Rolle beider autonomen Fahrzeuge wird auf Einzelfahrzeug gesetzt, d.h. das erste autonome Fahrzeug steuert nur noch seine eigene Bewegung automatisch und das zweite autonome Fahrzeug steuert seine eigene Bewegung selbst. Die Kommunikationsverbindung wird getrennt.

Die Konfiguration der Navigationsfunktionalität des ersten autonomen Fahrzeugs wird wieder auf die ursprüngliche Konfiguration zurückgesetzt.

Anschließend kann ein geregeltes Auseinanderbewegen beider autonomen Fahrzeuge erfolgen.

Es kann ein Flottenmanagement erfolgen. Die autonomen Fahrzeuge in dem Fahrzeugverbund kommunizieren ihre Rolle und die Identität den anderen autonomen Fahrzeuge in der Formation. Eine übergeordnete Ablaufsteuerung kann anhand dieser Information das den Fahrzeugverbund steuernde autonome Fahrzeug, d.h. das erste autonome Fahrzeug, direkt ansprechen und kommandieren. Alle autonomen Fahrzeuge in dem Fahrzeugverbund können somit als ein einzelnes autonomes Fahrzeug kommandiert werden.

Der Fahrzeugverbund kann auch mehr als zwei autonome Fahrzeuge aufweisen. Ein Fahrzeugverbund mit z.B. drei autonomen Fahrzeugen kann aus einem Fahrzeugverbund mit zwei autonomen Fahrzeugen und einem weiteren autonomen Fahrzeug erzeugt werden.

Aufgrund des erfindungsgemäßen Verfahrens ist es möglich, mehrere autonome Fahrzeuge in einem vollautomatisierten Betrieb zu einem Fahrzeugverbund zusammenzufügen, dann als solches zu kommandieren und gegebenenfalls später diesen entstandenen Fahrzeugverbund wieder aufzulösen. Insbesondere kann es vorgesehen sein, die auf die mehreren autonomen Fahrzeuge des Fahrzeugverbundes verteilten Antriebskontrollsysteme zu einem gemeinsamen Kontrollsystem umzuschalten, die autonome Navigationssoftware online umzukonfigurieren, um die veränderten Fahrzeugeigenschaften des Fahrzeugverbundes abbilden zu können, und die Sensoren aller am Fahrzeugverbund beteiligten autonomen Fahrzeuge nach einem gegebenenfalls vorgesehenen mechanischen Formationsschluss in die Navigation einzubeziehen.

Ein Ausführungsbeispiel der Erfindung ist exemplarisch in der beigefügten schematischen Figur dargestellt, die mehrere fahrerlose Transportfahrzeuge zeigt, die einen Fahrzeugverbund bilden.

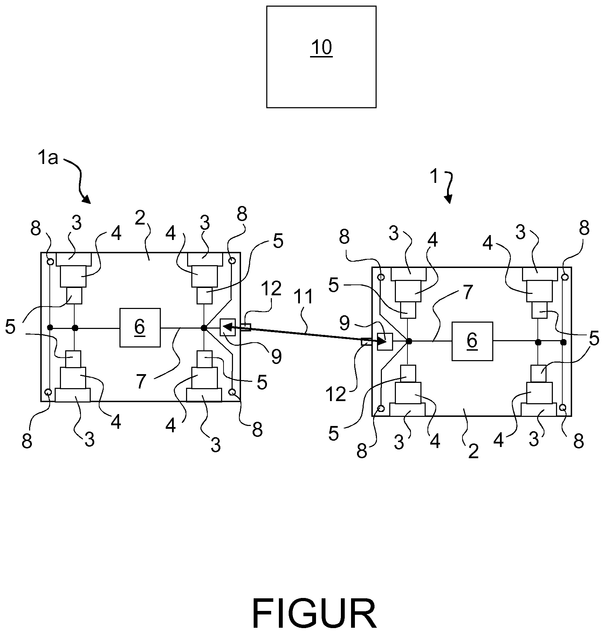

Die Figur zeigt eine erstes fahrerloses Transportfahrzeug 1 und ein zweites fahrerloses Transportfahrzeug 1a.

Im Falle des vorliegenden Ausführungsbeispiels umfasst jedes der fahrerlosen Transportfahrzeuge 1, 1a einen Fahrzeuggrundkörper 2, mehrere Räder 3, welche am Fahrzeuggrundkörper 2 mittels nicht näher dargestellten Aufhängungen befestigt sind, und mehrere elektrische Antriebe 4. Jedem der Räder 3 ist einer der elektrischen Antriebe 4 zugeordnet, sodass im Betrieb der fahrerlosen Transportfahrzeuge 1, 1a die elektrischen Antriebe 4 ihre Räder 3 anzutreiben vermögen.

Des Weiteren umfasst im Falle des vorliegenden Ausführungsbeispiels jedes der fahrerlosen Transportfahrzeuge 1, 1a Antriebsregelvorrichtungen 5, welche vorgesehen sind, die elektrischen Antriebe 4 zu regeln, z.B. derart, dass die entsprechenden Räder 3 eine vorgegebene Drehzahl aufweisen oder mit einem vorgegebenen elektrischen Strom betrieben werden, um beispielsweise ein bestimmtes Drehmoment zu erzeugen.

Die fahrerlosen Transportfahrzeuge 1, 1a umfassen ferner jeweils eine elektronische Steuervorrichtung 6, welche derart eingerichtet ist, dass sie das jeweilige fahrerlose Transportfahrzeug 1, 1a automatisch bewegen können. Die elektronischen Steuervorrichtungen 6 sind insbesondere derart eingerichtet, dass sie die entsprechenden Antriebsregelvorrichtungen 5 derart ansteuern können, sodass sich das entsprechende fahrerlose Transportfahrzeug 1, 1a automatisch wie gewünscht bewegt. Damit die elektronischen Steuervorrichtungen 6 mit den Antriebsregelvorrichtungen 5 des entsprechenden fahrerlosen Transportfahrzeugs 1, 1a zu kommunizieren vermögen, umfasst z.B. jedes der fahrerlosen Transportfahrzeuge 1, 1a ein entsprechendes Bus-System 7.

Die fahrerlosen Transportfahrzeuge 1, 1a weisen jeweils mehrere Sensoren 8 auf, welche z.B. über das jeweilige Bus-System 7 mit der entsprechenden elektronischen Steuervorrichtung 6 verbunden sind. Die Sensoren 8 sind insbesondere Laserscanner, mit deren Hilfe das entsprechende fahrerlose Transportfahrzeug 1, 1a die Umgebung abzutasten vermag. In den elektronischen Steuervorrichtungen 6 sind z.B. jeweils elektronische Karten von der Umgebung gespeichert, sodass die fahrerlosen Transportfahrzeuge 1, 1a bzw. ihre elektronischen Steuervorrichtungen 6 mittels einer Auswertung der von den Sensoren 8 stammenden Daten und der digitalen Karten ihre Lagen, d.h. ihre Positionen und Orientierungen innerhalb der Umgebung zu ermitteln vermögen.

Die fahrerlosen Transportfahrzeuge 1, 1a sind vorzugsweise als omnidirektional bewegbare bzw. holonome fahrerlose Transportfahrzeuge ausgebildet. Die Räder 3 sind vorzugsweise omnidirektionale Räder, die auch als Mecanum-Räder bezeichnet werden. Solche Räder umfassen beispielsweise eine drehbar gelagerte Felge, an der mehrere Rollkörper antriebslos gelagert sind. Die Felgen werden insbesondere mit den elektrischen Antrieben 5 angetrieben.

Im Falle des vorliegenden Ausführungsbeispiels ist eine übergeordnete Ablaufsteuerung 10 vorgesehen, welche mit den fahrerlosen Transportfahrzeugen 1, 1a insbesondere kabellos zu kommunizieren vermag.

Im Falle des vorliegenden Ausführungsbeispiels weisen die fahrerlosen Transportfahrzeuge 1, 1a jeweils eine drahtlose Sende-/ Empfangsvorrichtung auf, welche vorzugsweise als Datenlichtschranken 9 ausgebildet sind. Die Datenlichtschranke 9 des ersten fahrerlosen Transportfahrzeugs 1 ist mit dessen Bus-System 7 und die Datenlichtschranke 9 des zweiten fahrerlosen Transportfahrzeugs 1a ist mit dessen Bus-System 7 verbunden.

Im Falle des vorliegenden Ausführungsbeispiels sind die beiden fahrerlosen Transportfahrzeuge 1, 1a derart ausgeführt, dass sie automatisch ihre Bus-Systeme 7 über die drahtlosen Sende-/ Empfangsvorrichtungen, also im Falle des vorliegenden Ausführungsbeispiels über ihre Datenlichtschranken 9 zu verbinden vermögen. Dadurch entsteht eine bidirektionale Kommunikationsverbindung 11 zwischen den beiden als Datenlichtschranken 9 ausgeführten Sende-/ Empfangsvorrichtungen, wodurch aus den beiden individuellen Bus-Systemen 7 der beiden fahrerlosen Transportfahrzeugen 1, 1a ein Gesamtbus-System entsteht. Dadurch ist es z.B. möglich, dass die beiden elektronischen Steuervorrichtungen 6 miteinander kommunizieren können.

Im Falle des vorliegenden Ausführungsbeispiels ist es vorgesehen, dass nach der automatisch erfolgten Kommunikationsverbindung 11 zwischen den beiden als Datenlichtschranken 9 ausgeführten Sende-/ Empfangsvorrichtungen aus den beiden fahrerlosen Transportfahrzeugen 1, 1a ein Fahrzeugverbund bzw. eine Fahrzeugformation entsteht, bei dem bzw. bei der einer der beiden fahrerlosen Transportfahrzeugen, beispielsweise das erste fahrerlosen Transportfahrzeug 1, die Bewegung des anderen fahrerlosen Transportfahrzeugs, z.B. die Bewegung des zweiten fahrerlosen Transportfahrzeugs 1a automatisch steuert. Somit wird insbesondere eine gemeinsame Antriebsregelung beider fahrerloser Transportfahrzeuge 1, 1a gesteuert durch eines der beiden fahrerlosen Transportfahrzeuge 1, 1a erreicht.

Im Falle des vorliegenden Ausführungsbeispiels ist es vorgesehen, dass das die Bewegung beider fahrerlosen Transportfahrzeuge 1, 1a steuernde erste fahrerlose Transportfahrzeug 1a mit seiner elektronischen Steuervorrichtung 6 auch mit den Antriebsregelvorrichtungen 5 und den Sensoren 8 des anderen fahrerlosen Transportfahrzeugs 1a direkt über die Bus-Systeme 7 und der Kommunikationsverbindung 11, also über das Gesamtbus-System, kommuniziert, um die Bewegung des anderen fahrerlosen Transportfahrzeug 1a direkt zu steuern, also unter Umgehung der elektronischen Steuervorrichtung 6 des anderen fahrerlosen Transportfahrzeugs 1a.

Im Falle des vorliegenden Ausführungsbeispiels kann es noch vorgesehen sein, dass die beiden fahrerlosen Transportfahrzeuge 1, 1a für den Fahrzeugverbund mechanisch gekoppelt werden. Dazu können die beiden fahrerlosen Transportfahrzeuge 1, 1a jeweils eine mechanische Kopplungsvorrichtung 12 umfassen, die eine automatische mechanische Kopplung beider fahrerlosen Transportfahrzeuge 1, 1a ermöglichen.

Im Falle des vorliegenden Ausführungsbeispiels erfolgt die automatische Erzeugung des Fahrzeugverbunds bzw. der Fahrzeugformation folgendermaßen:
Ausgehend von einer beliebige Pose bzw. Lage (die Anfahrpose) eines der beiden fahrerlosen Transportfahrzeuge, z.B. des ersten fahrerlosen Transportfahrzeugs 1, sucht dieses mittels seiner Sensoren 8 nach charakteristischen Merkmalen des zweiten fahrerlosen Transportfahrzeugs 1a. Anhand von diesen Merkmalen ist es dem ersten fahrerlosen Transportfahrzeug 1 mit seiner elektronischen Steuervorrichtung 6 ermöglicht, die relative Pose bzw. Lage des zweiten fahrerlosen Transportfahrzeugs 1a relativ zum ersten fahrerlosen Transportfahrzeug 1 zu berechnen. Die charakteristischen Merkmale werden beispielsweise aus einem geometrischen Modell des zweiten fahrerlosen Transportfahrzeug 1a berechnet. Das Modell ist z.B. in der elektronischen Steuervorrichtung 6 des ersten fahrerlosen Transportfahrzeugs 1 gespeichert.

Anschließend fährt das erste fahrerlose Transportfahrzeug 1 automatisch gesteuert durch seine elektronische Steuervorrichtung 6 und vorzugsweise geregelt zu einer vordefinierten Andockpose bzw. Andocklage relativ zum zweiten fahrerlosen Transportfahrzeug 1a. Beispielsweise anhand von Daten der Sensoren 8 des ersten fahrerlosen Transportfahrzeugs 1 und Odometrie-Daten kann das erste fahrerlose Transportfahrzeug 1 automatisch die relative Pose bzw. Lage zum zweiten fahrerlosen Transportfahrzeug 1a während seiner automatischen Bewegung verfolgen. Die automatische Verfolgung der relativen Lage erfolgt beispielsweise anhand eines dem Fachmann im Prinzip bekannten Partikelfilter-basierten-Verfahrens.

Sind die beiden fahrerlosen Transportfahrzeuge 1, 1a ausreichend angenähert, verbinden sich automatisch über die als Datenlichtschranken 9 ausgebildeten Sende-/ Empfangsvorrichtungen die Bus-Systeme 7 beider fahrerlosen Transportfahrzeuge 1, 1a zum gemeinsamen Gesamtbus-System, indem automatisch die Kommunikationsverbindung 11 zwischen den beiden als Datenlichtschranken 9 ausgebildeten Sende-/ Empfangsvorrichtungen hergestellt wird. Dadurch wird die gemeinsame Antriebsregelung über das erste fahrerlose Transportfahrzeug 1 ermöglicht. Vorzugsweise werden Daten z.B. der Sensoren 8 des zweiten fahrerlosen Transportfahrzeugs 1a über die Kommunikationsverbindung 11 verteilt. Dadurch entsteht der Fahrzeugverbund bzw. die Fahrzeugformation.

Im Falle des vorliegenden Ausführungsbeispiels kann noch die mechanische Kopplung beider fahrerlosen Transportfahrzeuge 1, 1a über die mechanischen Kopplungsvorrichtungen 12 erfolgen. Die mechanische Kopplung erfolgt vorzugsweise nach dem Aufbau der Kommunikationsverbindung 11, sodass es möglich ist, die mechanische Kopplung ausschließlich mit dem ersten fahrerlosen Transportfahrzeug 1 zu kommandieren. Die mechanischen Kopplungsvorrichtungen 12 können jeweils einen Antrieb aufweisen, der über das entsprechende Bus-System 7 von der jeweiligen elektronischen Steuervorrichtung 6 ansteuerbar ist. Die fahrerlosen Transportfahrzeuge 1, 1a können auch im losen Verbund, d.h. ohne mechanische Kopplung, im Verbund verfahren werden.

Im Falle des vorliegenden Ausführungsbeispiels weisen die beiden fahrerlosen Transportfahrzeuge 1, 1a jeweils eine Navigationsfunktionalität auf, die z.B. auf einem Modell des entsprechenden fahrerlosen Transportfahrzeugs 1, 1a basiert. Dieses Modell ist z.B. in der entsprechenden elektronischen Steuervorrichtung 6 gespeichert. Das Modell umfasst z.B. eine Angabe über die Kontur, über den Drehmittelpunkt, über kino-dynamische Parameter (maximale Geschwindigkeit, Beschleunigung, etc.), über die Anzahl, die Position und Verbindungsdaten der Sensoren 8 des entsprechenden fahrerlosen Transportfahrzeugs 1, 1a.

Für die gemeinsame Antriebsregelung und allgemeine Kommandierung über das erste fahrerlose Transportfahrzeug 1 ist es vorzugsweise vorgesehen, dass die Navigationsfunktionalität des ersten fahrerlosen Transportfahrzeugs 1 automatisch an den Fahrzeugverbund angepasst wird, um insbesondere die Konfiguration des Fahrzeugverbundes bzw. der Fahrzeugformation darzustellen, also insbesondere dessen Kontur, Drehmittelpunkt, kino-dynamische Parameter (maximale Geschwindigkeit, Beschleunigung, etc. des Fahrzeugverbundes), Anzahl, Position und Verbindungsdaten der Sensoren 8.

Es kann auch eine automatische Auflösung des Fahrzeugverbundes vorgesehen sein. Dafür können folgende Schritte durchgeführt werden:
Sind die fahrerlosen Transportfahrzeuge 1, 1a mechanisch gekoppelt, erfolgt eine mechanische Entkopplung. Diese wird vorzugsweise durch das erste fahrerlose Transportfahrzeug 1 gesteuert. Die Kopplungsvorrichtungen 12 beider fahrerloser Transportfahrzeuge 1, 1a werden vorzugsweise gemeinsam geöffnet.

Anschließend erfolgt ein Wechsel der Fahrzeug-Rolle: Die Rolle beider fahrerlosen Transportfahrzeuge 1, 1a wird auf Einzelfahrzeug gesetzt, d.h. das erste fahrerlose Transportfahrzeug 1 steuert nur noch seine eigne Bewegung und das zweite fahrerlose Transportfahrzeug 1a steuert seiner eigene Bewegung selbst. Die Kommunikationsverbindung 12 wird getrennt.

Die Konfiguration der Navigationsfunktionalität des ersten fahrerlosen Transportfahrzeugs 1 wird wieder auf die ursprüngliche Konfiguration zurückgesetzt.

Anschließend kann ein geregeltes Auseinanderbewegen beider fahrerloser Transportfahrzeuge 1, 1a erfolgen.

Im Falle des vorliegenden Ausführungsbeispiels bleibt das zweite fahrerlose Transportfahrzeug 1a vor dem Etablieren der Kommunikationsverbindung 11 stehen und das erste fahrerlose Transportfahrzeug 1 steuert nach dem Aufbauen der Kommunikationsverbindung 11 das zweite fahrerlose Transportfahrzeug 1a. Es ist aber auch möglich, dass nach dem Aufbauen der Kommunikationsverbindung 11 das zweite fahrerlose Transportfahrzeug 1a die Bewegung des ersten fahrerlosen Transportfahrzeugs 1 steuert.

Es kann ein Flottenmanagement erfolgen. Die fahrerlosen Transportfahrzeuge 1, 1a in dem Fahrzeugverbund kommunizieren ihre Rolle und die Identität den anderen fahrerlosen Transportfahrzeugen 1, 1a in der Formation. Die übergeordnete Ablaufsteuerung 10 kann anhand dieser Information das den Fahrzeugverbund steuernde fahrerlose Transportfahrzeug 1 direkt ansprechen und kommandieren. Alle fahrerlosen Transportfahrzeuge 1, 1a in dem Fahrzeugverbund können somit als ein einzelnes fahrerloses Transportfahrzeug kommandiert werden.

Der Fahrzeugverbund kann auch mehr als zwei fahrerlose Transportfahrzeuge 1, 1a aufweisen. Ein Fahrzeugverbund mit z.B. drei fahrerlosen Transportfahrzeugen kann aus einem Fahrzeugverbund mit zwei fahrerlosen Transportfahrzeugen 1, 1a und einem weiteren fahrerlosen Transportfahrzeug erzeugt werden.

## Patentansprüche

1. Verfahren zum Bilden und Betreiben eines Fahrzeugverbundes, welcher zumindest ein erstes autonomes Fahrzeug (1) und ein zweites autonomes Fahrzeug (1a) aufweist, wobei jedes der autonomen Fahrzeuge (1, 1a) eingerichtet ist, in dem Zustand, in dem die autonomen Fahrzeuge (1, 1a) keinen Fahrzeugverbund bilden, seine Bewegung automatisch zu steuern, aufweisend folgende Verfahrensschritte:
a) automatisches Aufbauen einer Kommunikationsverbindung (11) zwischen dem ersten autonomen Fahrzeug (1) und dem zweiten autonomen Fahrzeug (1a), und
b) automatisches Steuern der Bewegung des zweiten autonomen Fahrzeugs (1a) durch das erste autonome Fahrzeug (1) über die Kommunikationsverbindung (11), um einen Fahrzeugverbund aus dem ersten autonomen Fahrzeug (1) und dem zweiten autonomen Fahrzeug (1a) zu bilden,
**dadurch gekennzeichnet, dass** jedes der autonomen Fahrzeuge (1, 1a) ein eigenes Bus-System (7), Räder (3) zum Bewegen des entsprechenden autonomen Fahrzeugs (1, 1a), Antriebsvorrichtungen (4, 5) zum Antreiben der Räder (3), Sensoren (8) und eine elektronische Steuervorrichtung (6) aufweist, wobei die Steuervorrichtung (6) eingerichtet ist, über das Bus-System (7) des entsprechenden autonomen Fahrzeugs (1, 1a) mit den Sensoren (8) und den Antriebsvorrichtungen (4, 5) des entsprechenden autonomen Fahrzeugs (1, 1a) zu kommunizieren, um in dem Zustand, in dem die autonomen Fahrzeuge (1, 1a) keinen Fahrzeugverbund bilden, ihr autonomes Fahrzeug (1, 1a) durch automatisches Ansteuern der Antriebsvorrichtungen (4, 5) des entsprechenden autonomen Fahrzeugs (1, 1a) automatisch zu bewegen, aufweisend die folgenden weiteren Verfahrensschritte:
- automatisches Aufbauen der Kommunikationsverbindung (11) zwischen dem Bus-System (7) des ersten autonomen Fahrzeugs (1) und dem Bus-System (7) des zweiten autonomen Fahrzeugs (1a), um ein Gesamtbus-System zu bilden, und
- direktes Ansteuern der Antriebsvorrichtungen (4, 5) des zweiten Transportfahrzeugs (1a) durch die elektronische Steuervorrichtung (6) des ersten autonomen Fahrzeugs (1) über das Gesamtbus-System, um den Fahrzeugverbund aus dem ersten autonomen Fahrzeug (1) und dem zweiten autonomen Fahrzeug (1a) zu bilden.

2. Verfahren nach Anspruch 1, aufweisend vor dem Schritt a) Detektieren von charakteristischen Merkmalen des zweiten autonomen Fahrzeugs (1a) durch das erste autonome Fahrzeug (1) und Ermitteln der relativen Lage zwischen den beiden autonomen Fahrzeugen (1, 1a) durch das erste autonome Fahrzeug (1) und automatisches Bewegen des ersten autonomen Fahrzeugs (1) insbesondere gesteuert durch seine elektronische Steuervorrichtung (6), sodass die beiden autonomen Fahrzeuge (1, 1a) eine vorbestimmte Lage relativ zueinander aufweisen, oder
Detektieren von charakteristischen Merkmalen des ersten autonomen Fahrzeugs (1) durch das zweite autonomen Fahrzeug (1a) und Ermitteln der relativen Lage zwischen den beiden autonomen Fahrzeuge (1, 1a) durch das zweite autonomen Fahrzeug (1a) und automatisches Bewegen des zweiten autonomen Fahrzeugs (1a) insbesondere gesteuert durch seine elektronische Steuervorrichtung (6), sodass die beiden autonomen Fahrzeuge (1, 1a) eine vorbestimmte Lage relativ zueinander aufweisen.

3. Verfahren nach einem der Ansprüche 1 bis 2, bei dem die beiden autonomen Fahrzeuge (1, 1a) jeweils eine mechanisehe Kopplungsvorrichtung (12) aufweisen, aufweisend den folgenden Verfahrensschritt:
- automatisches mechanisches Koppeln der beiden autonomen Fahrzeuge (1, 1a) mittels der mechanische Kopplungsvorrichtungen (12) insbesondere gesteuert durch die elektronische Steuervorrichtung (6) des ersten autonomen Fahrzeugs (1) über das Gesamtbus-System.

4. Verfahren nach einem der Ansprüche 1 bis 3, bei dem die beiden autonomen Fahrzeuge (1, 1a) jeweils eine Navigationsfunktionalität aufweisen, die eine Information über die Konfiguration des entsprechenden autonomen Fahrzeugs (1, 1a) umfasst und basierend derer die elektronischen Steuervorrichtungen (6) der beiden autonomen Fahrzeuge (1, 1a) in dem Zustand, in dem die autonomen Fahrzeuge (1, 1a) keinen Fahrzeugverbund bilden, ihr autonomes Fahrzeug (1, 1a) automatisch bewegen, aufweisend den folgenden Verfahrensschritt:
- automatisches Umkonfigurieren der Navigationsfunktionalität des ersten autonomen Fahrzeugs (1), sodass diese eine Information über die Konfiguration des Fahrzeugverbundes umfasst.

5. Verfahren nach Anspruch 4, bei dem die Information über die Konfiguration des entsprechenden autonomen Fahrzeugs (1, 1a) ein Modell des entsprechenden autonomen Fahrzeugs (1, 1a) und die Information über die Konfiguration des Fahrzeugverbundes ein Modell des Fahrzeugverbundes umfasst.

6. Verfahren nach Anspruch 4 oder 5, aufweisend Trennen der Kommunikationsverbindung (11), um den Fahrzeugverbund aufzulösen, und automatisches Zurücksetzten der Konfiguration der Navigationsfunktionalität des ersten autonomen Fahrzeugs (1).

7. Fahrzeugverbund, aufweisend wenigstens ein erstes autonomes Fahrzeug (1) und ein zweites autonomes Fahrzeug (1a), die jeweils eingerichtet sind, in dem Zustand, in dem die autonomen Fahrzeuge (1, 1a) keinen Fahrzeugverbund bilden, ihre Bewegungen automatisch zu steuern, wobei während des Fahrzeugverbundes die beiden autonomen Fahrzeuge (1, 1a) über eine Kommunikationsverbindung (11) verbunden sind und das erste autonome Fahrzeug (1) über die Kommunikationsverbindung (11) die Bewegung des zweiten autonomen Fahrzeugs (1a) automatisch steuert, **dadurch gekennzeichnet, dass** jedes der autonomen Fahrzeuge (1, 1a) ein eigenes Bus-System (7), Räder (3) zum Bewegen des entsprechenden autonomen Fahrzeugs (1, 1a), Antriebsvorrichtungen (4, 5) zum Antreiben der Räder (3), Sensoren (8) und eine elektronische Steuervorrichtung (6) aufweist, welche über das Bus-System (7) des entsprechenden autonomen Fahrzeugs (1, 1a) mit den Sensoren (8) und den Antriebsvorrichtungen (4, 5) des entsprechenden autonomen Fahrzeugs (1, 1a) zu kommunizieren vermag, um in dem Zustand, in dem die autonomen Fahrzeuge (1, 1a) keinen Fahrzeugverbund bilden, ihr autonomes Fahrzeug (1, 1a) durch automatisches Ansteuern der Antriebsvorrichtungen (4, 5) des entsprechenden autonomen Fahrzeugs (1, 1a) automatisch zu bewegen, und während des Fahrzeugverbundes die beiden Bus-Systeme (7) über die Kommunikationsverbindung (11) ein Gesamtbus-System bilden, und die elektronische Steuervorrichtung (6) des ersten autonomen Fahrzeugs (1) über das Gesamtbus-System die Antriebsvorrichtungen (4, 5) des zweiten autonomen Fahrzeugs (1a) direkt ansteuert, um den Fahrzeugverbund aus dem ersten autonomen Fahrzeug (1) und dem zweiten autonomen Fahrzeug (1a) zu bilden.

8. Fahrzeugverbund nach Anspruch 7, bei dem
das erste autonomen Fahrzeug (1) eingerichtet ist, charakteristische Merkmale des zweiten autonomen Fahrzeugs (1a) zu detektieren, um die relativen Lage zwischen den beiden autonomen Fahrzeuge (1, 1a) zu ermitteln und um sich automatisch insbesondere gesteuert durch seine elektronische Steuervorrichtung (6) derart zu bewegen, sodass die beiden autonomen Fahrzeuge (1, 1a) eine vorbestimmte Lage relativ zueinander aufweisen, oder
das zweite autonomen Fahrzeug (1a) eingerichtet ist, charakteristische Merkmale des ersten autonomen Fahrzeugs (1) zu detektieren, um die relativen Lage zwischen den beiden autonomen Fahrzeuge (1, 1a) zu ermitteln und um sich automatisch insbesondere gesteuert durch seine elektronische Steuervorrichtung (6) derart zu bewegen, sodass die beiden autonomen Fahrzeuge (1, 1a) eine vorbestimmte Lage relativ zueinander aufweisen.

9. Fahrzeugverbund nach einem der Ansprüche 7 bis 8, bei dem die beiden autonomen Fahrzeuge (1, 1a) jeweils eine mechanische Kopplungsvorrichtung (12) aufweisen und das erste autonome Fahrzeug (1) eingerichtet ist, die beiden autonomen Fahrzeuge (1, 1a) mittels der mechanische Kopplungsvorrichtung (12), insbesondere gesteuert durch die elektronische Steuervorrichtung (6) des ersten autonomen Fahrzeugs (1) über das Gesamtbus-System, mechanisch zu koppeln.

10. Fahrzeugverbund nach einem der Ansprüche 7 bis 9, bei dem die beiden autonomen Fahrzeuge (1, 1a) jeweils eine Navigationsfunktionalität aufweisen, die eine Information über die Konfiguration des entsprechenden autonomen Fahrzeugs (1, 1a) umfasst und basierend derer die elektronischen Steuervorrichtungen (6) der beiden autonomen Fahrzeuge (1, 1a) in dem Zustand, in dem die autonomen Fahrzeuge (1, 1a) keinen Fahrzeugverbund bilden, ihr autonomes Fahrzeug (1, 1a) automatisch bewegen, und das erste autonomen Fahrzeug (1) eingerichtet ist, automatisch seine Navigationsfunktionalität derart umzukonfigurieren, dass diese eine Information über die Konfiguration des Fahrzeugverbundes umfasst, wobei insbesondere die Information über die Konfiguration des entsprechenden autonomen Fahrzeugs (1, 1a) ein Modell des entsprechenden autonomen Fahrzeugs (1, 1a) und die Information über die Konfiguration des Fahrzeugverbundes ein Modell des Fahrzeugverbundes umfasst.

11. Fahrzeugverbund nach Anspruch 10, bei dem das erste autonome Fahrzeug (1) eingerichtet ist, die Kommunikationsverbindung (11) zu trennen, um den Fahrzeugverbund aufzulösen, und eingerichtet ist, automatisch die Konfiguration seiner Navigationsfunktionalität zurückzusetzen.

## Claims

1. Method for forming and operating a vehicle combination, which comprises at least one first autonomous vehicle (1) and a second autonomous vehicle (1a), wherein each of the autonomous vehicles (1, 1a) is configured to automatically control its motion in a state in which the autonomous vehicles (1, 1a) do not form a vehicle combination, comprising the following method steps:
a) automatically generating a communication connection (11) between the first autonomous vehicle (1) and the second autonomous vehicle (1a), and
b) automatically controlling the movement of the second autonomous vehicle (1a) with the first autonomous vehicle (1) via the communication connection (11) in order to form a vehicle combination from the first autonomous vehicle (1) and the second autonomous vehicle (1a),
**characterised in that**
each of the autonomous vehicles (1, 1a) comprises a separate bus system (7), wheels (3) for moving the respective autonomous vehicle (1, 1a), drive devices (4, 5) for driving the wheels (3), sensors (8) and an electronic control device (6), wherein the control device (6) is configured to communicate via the bus system (7) of the corresponding autonomous vehicle (1, 1a) with the sensors (8) and the drive devices (4, 5) of the corresponding autonomous vehicle (1, 1a), in order in the state in which the autonomous vehicles (1, 1a) do not form a vehicle combination, to automatically move their autonomous vehicle (1, 1a) by automatically controlling the drive devices (4, 5) of the respective autonomous vehicle (1, 1a), comprising the following additional method steps:
- automatically generating the communication connection (11) between the bus system (7) of the first autonomous vehicle (1) and the bus system (7) of the second autonomous vehicle (1a) to form a common bus system and
- directly controlling the drive devices (4, 5) of the second transport vehicle (1a) with the electronic control device (6) of the first automatous vehicle (1) via the common bus system in order to form the vehicle combination from the first autonomous vehicle (1) and the second autonomous vehicle (1a).

2. Method according to claim 1, comprising before step a) detecting characteristic features of the second autonomous vehicle (1a) with the first autonomous vehicle (1), and determining the relative position between the two autonomous vehicles (1, 1a) with the first autonomous vehicle (1) and automatically moving the first autonomous vehicle (1), in particular controlled by its electronic control device (6), so that the two autonomous vehicles (1, 1a) assume a predetermined position relative to each other, or detecting characteristic features of the first autonomous vehicle (1) with the second autonomous vehicle (1a) and determining the relative position between the two autonomous vehicles (1, 1a) with the second autonomous vehicle (1a) and
automatically moving the second autonomous vehicle (1a) controlled in particular by its electronic control device (6) so that the two autonomous vehicles (1, 1a) assume a predetermined position relative to each other.

3. Method according to any of claims 1 to 2, wherein the two autonomous vehicles (1, 1a) each have a mechanical coupling device (12), comprising the following method step:
- automatically mechanically coupling the two autonomous vehicles (1, 1a) by means of the mechanical coupling devices (12), in particular controlled by the electronic control device (6) of the first autonomous vehicle (1) via the common bus system.

4. Method according to any of claims 1 to 3, wherein the two autonomous vehicles (1, 1a) each have a navigation functionality which includes information about the configuration of the respective autonomous vehicle (1, 1a) and on the basis of which the electronic control devices (6) of the two autonomous vehicles (1, 1a), in the state in which the autonomous vehicles (1, 1a) do not form the vehicle combination, automatically move their respective autonomous vehicle (1, 1a), comprising the following method step:
- automatically reconfiguring the navigation functionality of the first autonomous vehicle (1), so that it includes information about the configuration of the vehicle combination.

5. Method according to claim 4, wherein the information about the configuration of the corresponding autonomous vehicle (1, 1a) includes a model of the respective autonomous vehicle (1, 1a) and information about the configuration of the vehicle combination includes a model of the vehicle combination.

6. Method according to claim 4 or 5, comprising separating the communication connection (11) in order to break up the vehicle combination and automatically resetting the configuration of the navigation functionality of the first autonomous vehicle (1).

7. Vehicle combination, comprising at least one first autonomous vehicle (1)
and a second autonomous vehicle (1a) which are each configured, in the state in which the autonomous vehicles (1, 1a) do not form a vehicle combination, to control their movements automatically, wherein during the vehicle combination the two autonomous vehicles (1, 1a) are connected via a communication connection (11) and the first autonomous vehicle (1) automatically controls the movement of the second autonomous vehicle (1a) via the communication connection (11), **characterised in that** each of the autonomous vehicles (1, 1a) comprises a separate bus system (7), wheels (3) for moving the corresponding autonomous vehicle (1, 1a), drive devices (4, 5) for driving the wheels (3), sensors (8) and an electronic control device (6) which can communicate with the sensors (8) and the drive devices (4, 5) of the respective autonomous vehicle (1, 1a) via the bus system (7) of the corresponding autonomous vehicle (1, 1a), in order in the state in which the autonomous vehicles (1, 1a) do not form the vehicle combination, to automatically move their autonomous vehicle (1, 1a) by automatically controlling the drive devices (4, 5) of the respective autonomous vehicle (1, 1a) and during the vehicle combination the two bus systems (7) form a common bus system via the communication connection (11) and the electronic control device (6) of the first autonomous vehicle (1) directly controls the drive devices (4, 5) of the second autonomous vehicle (1a) via the common bus system in order to form the vehicle combination from the first autonomous vehicle (1) and the second autonomous vehicle (1a).

8. Vehicle combination according to claim 7, wherein
the first autonomous vehicle (1) is configured to detect characteristic features of the second autonomous vehicle (1a) in order to determine the relative position between the two autonomous vehicles (1, 1a), and to move automatically in particular controlled by its electronic control device (6) such that the two autonomous vehicles (1, 1a) assume a predetermined position relative to each other, or
the second autonomous vehicle (1a) is configured to detect characteristic features of the first autonomous vehicle (1) in order to determine the relative position between the two autonomous vehicles (1, 1a), and to move automatically in particular controlled by its electronic control device (6) such that the two autonomous vehicles (1, 1a) assume a predetermined position relative to each other.

9. Vehicle combination according to any of claims 7 to 8, wherein the two autonomous vehicles (1, 1a) each comprise a mechanical coupling device (12) and the first autonomous vehicle (1) is configured to mechanically couple the two autonomous vehicles (1, 1a) by means of the mechanical coupling device (12), in particular controlled by the electronic control device (6) of the first autonomous vehicle (1) via the common bus system.

10. Vehicle combination according to any of claims 7 to 9, wherein the two autonomous vehicles (1, 1a) each have a navigation functionality which includes information about the configuration of the respective autonomous vehicle (1, 1a) and on the basis of which the electronic control devices (6) of the two autonomous vehicles (1, 1a), in the state in which the autonomous vehicles (1, 1a) do not form a vehicle combination, automatically move their respective autonomous vehicle (1, 1a), and the first autonomous vehicle (1) is configured to automatically reconfigure its navigation functionality such that it includes information about the configuration of the vehicle combination, wherein in particular information about the configuration of the corresponding autonomous vehicle (1, 1a) includes a model of the respective autonomous vehicle (1, 1a) and information about the configuration of the vehicle combination incudes a model of the vehicle combination.

11. Vehicle combination according to claim 10, wherein the first autonomous vehicle (1) is configured to separate the communication connection (11) in order to break up the vehicle combination and is configured to automatically reset the configuration of its navigation functionality.

## Revendications

1. Procédé de formation et de fonctionnement d'un véhicule composite qui présente au moins un premier véhicule autonome (1) et un deuxième véhicule autonome (1a), chacun des véhicules autonomes (1, 1a) étant conçu pour commander, dans l'état dans lequel les véhicules autonomes (1, 1a) ne forment pas un véhicule composite, son déplacement de manière automatique, le procédé présentant les étapes de procédé suivantes :
a) Etablissement automatique d'une liaison de communication (11) entre le premier véhicule autonome (1) et le deuxième véhicule autonome (1a), et
b) commande automatique du déplacement du deuxième véhicule autonome (1a) par le premier véhicule autonome (1) via la liaison de communication (11) pour former un véhicule composite constitué par le premier véhicule autonome (1) et le deuxième véhicule autonome (1a),
**caractérisé en ce que**
chacun des véhicules autonomes (1, 1a) présente un système de bus (7) propre, des roues (3) pour déplacer le véhicule autonome (1, 1a) correspondant, des dispositifs d'entraînement (4, 5) pour entraîner les roues (3), des capteurs (8) et un dispositif de commande électronique (6), le dispositif de commande (6) étant conçu pour communiquer, via le système de bus (7) du véhicule autonome (1, 1a) correspondant, avec les capteurs (8) et les dispositifs d'entraînement (4, 5) du véhicule autonome (1, 1a) correspondant pour déplacer automatiquement leur véhicule autonome (1, 1a) par pilotage automatique des dispositifs d'entraînement (4, 5) du véhicule autonome (1, 1a) correspondant, dans l'état dans lequel les véhicules autonomes (1, 1a) ne forment pas un véhicule composite, présentant les autres étapes de procédé suivantes:
- établissement automatique de la liaison de communication (11) entre le système de bus (7) du premier véhicule autonome (1) et le système de bus (7) du deuxième véhicule autonome (1a) pour former un système de bus total, et
- pilotage direct des dispositifs d'entraînement (4, 5) du deuxième véhicule de transport (1a) par le dispositif de commande électronique (6) du premier véhicule autonome (1) via le système de bus total pour former le véhicule composite constitué par le premier véhicule autonome (1) et le deuxième véhicule autonome (1a).

2. Procédé selon la revendication 1, présentant avant l'étape a):
détection de caractéristiques particulières du deuxième véhicule autonome (1a) par le premier véhicule autonome (1) et détermination de la position relative entre les deux véhicules autonomes (1, 1a) par le premier véhicule autonome (1) et déplacement automatique du premier véhicule autonome (1) en particulier commandé par son dispositif de commande électronique (6), de telle sorte que les deux véhicules autonomes (1, 1a) présentent une position prédéterminée l'un par rapport à l'autre, ou
détection de caractéristiques particulières du premier véhicule autonome (1) par le deuxième véhicule autonome (1a) et détermination de la position relative entre les deux véhicules autonomes (1, 1a) par le deuxième véhicule autonome (1a) et déplacement automatique du deuxième véhicule autonome (1a), en particulier commandé par son dispositif de commande électronique (6), de telle sorte que les deux véhicules autonomes (1, 1a) présentent une position prédéterminée l'un par rapport à l'autre.

3. Procédé selon l'une des revendications 1 à 2, dans lequel les deux véhicules autonomes (1, 1a) présentent chacun un dispositif d'accouplement (12) mécanique, présentant l'étape de procédé suivante:
- accouplement mécanique automatique des deux véhicules autonomes (1, 1a) au moyen des dispositifs d'accouplement mécaniques (12), en particulier commandés par le dispositif de commande électronique (6) du premier véhicule autonome (1) via le système de bus total.

4. Procédé selon l'une des revendications 1 a 3, dans lequel les deux véhicules autonomes (1, 1a) présentent chacun une fonctionnalité de navigation qui comprend une information sur la configuration du véhicule autonome (1, 1a) correspondant et, sur la base de laquelle les dispositifs de commande électroniques (6) des deux véhicules autonomes (1, 1a) déplacent automatiquement leur véhicule autonome (1, 1a), dans l'état dans lequel les véhicules autonomes (1, 1a) ne forment pas un véhicule composite, présentant l'étape de procédé suivante :
- reconfiguration automatique de la fonctionnalité de navigation du premier véhicule autonome (1), de telle sorte que celle-ci comprend une information sur la configuration du véhicule composite.

5. Procédé selon la revendication 4, dans lequel l'information sur la configuration du véhicule autonome (1, 1a) correspondant comprend un modèle du véhicule autonome (1, 1a) correspondant et l'information sur la configuration du véhicule composite comprend un modèle du véhicule composite.

6. Procédé selon les revendications 4 ou 5, présentant la séparation de la liaison de communication (11) pour décomposer le véhicule composite, et la réinitialisation automatique de la configuration de la fonctionnalité de navigation du premier véhicule autonome (1).

7. Véhicule composite présentant au moins un premier véhicule autonome (1) et un deuxième véhicule autonome (1a), qui sont chacun conçus pour commander automatiquement leur déplacement, dans l'état dans lequel les véhicules autonomes (1, 1a) ne forment pas un véhicule composite, les deux véhicules autonomes (1, 1a) étant reliés, pendant leur état de véhicule composite, via une liaison de communication (11), et le premier véhicule autonome (1) commandant automatiquement le déplacement du deuxième véhicule autonome (1a) via la liaison de communication (11), **caractérisé en ce que** chacun des véhicules autonomes (1, 1a) présente un système de bus (7) propre, des roues (3) pour déplacer le véhicule autonome (1, 1a) correspondant, des dispositifs d'entraînement (4, 5) pour entraîner les roues (3), des capteurs (8) et un dispositif de commande électronique (6) qui est en mesure de communiquer via le système de bus (7) du véhicule autonome (1, 1a) correspondant avec les capteurs (8) et les dispositifs d'entraînement (4, 5) du véhicule autonome (1, 1a) correspondant pour déplacer automatiquement leur véhicule autonome (1, 1a) par pilotage automatique des dispositifs d'entraînement (4, 5) du véhicule autonome (1, 1a) correspondant, dans l'état dans lequel les véhicules autonomes (1, 1a) ne forment pas un véhicule composite, et pendant l'état de véhicule composite, les deux systèmes de bus (7) forment via la liaison de communication (11) un système de bus total, et le dispositif de commande électronique (6) du premier véhicule autonome (1) pilote via le système de bus total directement les dispositifs d'entraînement (4, 5) du deuxième véhicule autonome (1a) pour former le véhicule composite constitué par le premier véhicule autonome (1) et le deuxième véhicule autonome (1a).

8. Véhicule composite selon la revendication 7, dans lequel
le premier véhicule autonome (1) est conçu pour détecter des caractéristiques particulières du deuxième véhicule autonome (1a) pour déterminer la position relative entre les deux véhicules autonomes (1, 1a) et pour se déplacer automatiquement, commandé en particulier par son dispositif de commande électronique (6), de telle sorte que les deux véhicules autonomes (1, 1a) présentent une position prédéterminée l'un par rapport à l'autre, ou
le deuxième véhicule autonome (1a) est conçu pour détecter des caractéristiques particulières du premier véhicule autonome (1) pour déterminer la position relative entre les deux véhicules autonomes (1, 1a) et pour se déplacer automatiquement, commandé en particulier par son dispositif de commande électronique (6), de telle sorte que les deux véhicules autonomes (1, 1a) présentent une position prédéterminée l'un par rapport à l'autre.

9. Véhicule composite selon l'une des revendications 7 à 8, dans lequel les deux véhicules autonomes (1, 1a) présentent chacun un dispositif d'accouplement (12) mécanique et le premier véhicule autonome (1) est conçu pour coupler mécaniquement les deux véhicules autonomes (1, 1a) au moyen du dispositif d'accouplement (12) mécanique, commandé en particulier par le dispositif de commande électronique (6) du premier véhicule autonome (1) via le système de bus total.

10. Véhicule composite selon l'une des revendications 7 à 9, dans lequel les deux véhicules autonomes (1, 1a) présentent chacun une fonctionnalité de navigation qui comprend une information sur la configuration du véhicule autonome (1. 1a) correspondant et, sur la base de laquelle les dispositifs de commande électroniques (6) des deux véhicules autonomes (1, 1a) déplacent automatiquement leur véhicule autonome (1, 1a), dans l'état dans lequel les véhicules autonomes (1, 1a) ne forment pas un véhicule composite, et le premier véhicule autonome (1) est conçu pour reconfigurer automatiquement sa fonctionnalité de navigation, de telle sorte que celle-ci comprend une information sur la configuration du véhicule composite, l'information sur la configuration du véhicule autonome (1, 1a) correspondant comprenant un modèle du véhicule autonome (1, 1a) correspondant et l'information sur la configuration du véhicule composite comprenant un modèle du véhicule composite.

11. Véhicule composite selon la revendication 10, dans lequel le premier véhicule autonome (1) est conçu pour séparer la liaison de communication (11) pour décomposer le véhicule composite et est conçu pour réinitialiser automatiquement la configuration de sa fonctionnalité de navigation.
